# EUROPÄISCHE PATENTANMELDUNG

(11) **EP 3 342 688 A1**
(43) Veröffentlichungstag der Anmeldung: **04.07.2018**
(21) Anmeldenummer: 17197454.6
(22) Anmeldetag: 20.10.2017
(51) Int. Cl.: B62D 33/063, E02F 9/16, F16F 1/38, F16F 1/387

(54) **KABINENHUBGESTELL FÜR EIN MATERIALUMSCHLAGGERÄT**

(30) Priorität: 22.12.2016 DE 102016015384
(71) Anmelder: Liebherr-Hydraulikbagger GmbH, 88457 Kirchdorf (DE)
(72) Erfinder: Henkel, Stephan, 87700 Memmingen (DE); Altvater, Philipp, 88457 Oberopfingen (DE)
(74) Vertreter: Laufhütte, Dieter

(57) **Zusammenfassung**

Die Erfindung betrifft ein Kabinenhubgestell für ein Materialumschlaggerät, mit wenigstens einem gedämpft gelagerten Hydraulikzylinder. Die Erfindung ist ferner auf eine entsprechende Dämpfungsbuchse zur Dämpfung des Hydraulikzylinders und auf ein Materialumschlaggerät mit einem entsprechenden Kabinenhubgestell gerichtet.

## Beschreibung

Die Erfindung betrifft ein Kabinenhubgestell für ein Materialumschlaggerät, mit wenigstens einem gedämpft gelagerten Hydraulikzylinder. Die Erfindung ist ferner auf eine Dämpfungsbuchse zur Dämpfung des Hydraulikzylinders und auf ein Materialumschlaggerät mit einem entsprechenden Kabinenhubgestell gerichtet.

Bei bekannten Materialumschlaggeräten mit einem Kabinenhubgestell werden bei Arbeitseinsätzen der Materialumschlaggeräte über die Ausrüstung bzw. über einen Oberwagen des Materialumschlaggeräts und über das Kabinenhubgestell selbst insbesondere vertikale Beschleunigung auf die am Kabinenhubgestell vorgesehene Kabine und damit auf den darin das Gerät bedienenden Fahrer übertragen. Um diese für das Gerät und den Fahrer nachteiligen Beschleunigungen zu reduzieren ist es gemäß dem Stand der Technik bekannt, eine hydraulische Dämpfung eines entsprechenden Hydraulikzylinders mit beispielsweise einer Rohrbruchsicherung, einem Membranspeichers und/oder mit diversen Rückschlagventilen vorzusehen.

Nachteilig an den aus dem Stand der Technik bekannten Lösungen ist, dass die bekannten hydraulischen Dämpfungen nur eine eingeschränkte Dämpfung mit entsprechend eingeschränktem Komfort gewährleisten können. Gleichzeitig umfassen die bekannten Vorrichtungen verhältnismäßig viele, komplexe und zum Teil auch teure Komponenten, was die bekannten Vorrichtungen entsprechend teuer und anfällig für Defekte sowie nicht besonders einfach in der Montage bzw. Herstellung und Wartung macht.

Aufgabe der Erfindung ist es vor diesem Hintergrund eine verbesserte und insbesondere kostengünstigere Lösung für die Dämpfung des Kabinenhubgestells eines entsprechenden Materialumschlaggeräts bereitzustellen. Das erfindungsgemäße Kabinenhubgestell kann insbesondere in einem angehobenen Zustand bzw. in einem Zustand mit angehobener hydraulischer Fahrerkabinenerhöhung die vertikalen und gegebenenfalls weitere Beschleunigungen bei Arbeitsspielen bzw. bei Durchführung von Arbeiten minimieren.

Diese Aufgabe wird erfindungsgemäß durch ein Kabinenhubgestell mit den Merkmalen des Anspruchs 1 gelöst. Vorteilhafte Ausgestaltungen sind Gegenstand der Unteransprüche. Demnach ist ein Kabinenhubgestell vorgesehen, dessen Hydraulikzylinder zum Verstellen des Kabinenhubgestells über wenigstens eine Dämpfungsbuche am Kabinenhubgestell und/oder an einem sonstigen Abschnitt des Materialumschlaggeräts gelagert ist. Der Hydraulikzylinder kann hierbei als Teil des Kabinenhubgestells ausgebildet sein, welcher über die genannte Dämpfungsbuchse mit weiteren Teilen des Kabinenhubgestells und/oder mit sonstigen Abschnitten des Materialumschlaggeräts gekoppelt ist. Bei dem Hydraulikzylinder kann es sich um eine an sich bekannte Zylinder-Kolben-Vorrichtung handeln, welche insbesondere zum hydraulischen Bewegen des Kabinenhubgestells ausgebildet ist. Bei dem sonstigen Abschnitt des Materialumschlaggeräts kann es sich um beliebige Abschnitte des Materialumschlaggeräts handeln, welche nicht Teil des Kabinenhubgestells sind.

Neu und vorteilhaft an dem erfindungsgemäßen Kabinenhubgestell ist die mechanisch gedämpfte Lagerung des Hydraulikzylinders zum Bewegen des Kabinenhubgestells relativ zum Materialumschlaggerät in einem Dämpfungselement, insbesondere in einer Dämpfungsbuchse bzw. mittels eines entsprechenden Elements. Die Dämpfungsbuchse kann bodenseitig und alternativ oder zusätzlich stangenseitig am Hydraulikzylinder angeordnet sein. Durch die alleinige Verwendung einer entsprechenden mechanischen Dämpfungsbuche entfällt die Notwendigkeit komplexer hydraulischer Dämpfungssysteme, wodurch Einsparungen bei der Herstellung der Vorrichtung realisiert werden können und weitere der oben genannten Probleme vermieden werden können, die bei gemäß dem Stand der Technik ausgeführten Kabinenhubgestellen auftreten können.

In einer bevorzugten Ausführung ist es denkbar, dass die Dämpfungsbuchse eine Gummi-Metall-Buchse ist. Sie kann damit wenigstens einen Gummiabschnitt und wenigstens einen Metallabschnitt umfassen, die in insbesondere direktem Kontakt miteinander stehen können. Denkbar ist, dass die beiden genannten Unterabschnitte der Gummi-Metall-Buchse jeweils einstückig gefertigt sind. Die Dämpfungsbuchse stellt damit eine rein mechanische Dämpfungsvorrichtung für den Hydraulikzylinder dar und weicht damit von den bekannten hydraulischen Dämpfungsvorrichtungen des Standes der Technik ab.

In einer weiteren bevorzugten Ausführung ist denkbar, dass die Dämpfungsbuchse mittels wenigstens einer Lagerschale am Kabinenhubgestell und/oder an einem sonstigen Abschnitt des Materialumschlaggeräts gekoppelt ist. Die Lagerschale kann dabei aus zwei ähnlichen oder identischen Hälften gefertigt sein, die dazu ausgebildet sind, die Dämpfungsbuchse innerhalb einer an der Lagerschale vorgesehenen Ausnehmung aufzunehmen. Zum Koppeln der Dämpfungsbuchse kann die Lagerschale beispielsweise mit benachbarten Strukturen insbesondere des Kabinenhubgestells verschraubt werden.

In einer weiteren bevorzugten Ausführung ist denkbar, dass die Dämpfungsbuchse wenigstens eine erste insbesondere radial mittig angeordnete und weitere insbesondere wenigstens teilweise zylinderförmige Durchführung umfasst. Innerhalb der Durchführung kann ein Kopplungselement zum Koppeln der Dämpfungsbuchse mit dem Hydraulikzylinder vorgesehen sein. Das Kopplungselement kann wiederum mittels von Sicherungsmitteln kraft- und/oder formschlüssig innerhalb der Durchführung festgestellt sein.

In einer besonders bevorzugten Ausführung kann vorgesehen sein, dass die Dämpfungsbuchse wenigstens eine radial weiter außen als die erste Durchführung gelegene zweite Durchführung an der Dämpfungsbuchse umfasst. Die wenigstens eine zweite Durchführung kann durch ihre Ausgestaltung die Elastizität der Dämpfungsbuche beeinflussen und insbesondere innerhalb des Gummiabschnitts der Dämpfungsbuche vorgesehen sein. Mittels der zweiten Durchführung ist es möglich, die Elastizität der Dämpfungsbuchse und damit das Dämpfungsverhalten der Dämpfungsbuche zu beeinflussen und ein gewünschtes Dämpfungsverhalten beispielsweise durch Größe und/oder Position der zweiten Durchführung festzulegen.

In einer weiteren bevorzugten Ausführung ist es denkbar, dass die Dämpfungsbuchse wenigstens eine in Umfangsrichtung der Dämpfungsbuche verlaufende Ausnehmung umfasst. Die Ausnehmung kann dabei beispielsweise innerhalb des Gummiabschnitts der Dämpfungsbuchse vorgesehen sein und zur Festlegung eines elastischen Verhaltens der Dämpfungsbuchse je nach Wunsch tiefer, breiter oder anderweitig verändert ausgeführt sein.

In einer weiteren bevorzugten Ausführung ist denkbar, dass die wenigstens eine zweite Durchführung in Richtung des Hydraulikzylinders ausgerichtet ist. Denkbar ist auch eine davon abweichende Ausrichtung der zweiten Durchführung, bei der diese beispielsweise dauerhaft vertikal bezogen auf die Horizontale ausgerichtet ist und nicht in Abhängigkeit von der veränderbaren Ausrichtung des Hydraulikzylinders ausgebildet ist.

Die Erfindung ist ferner auf eine Dämpfungsbuchse für einen Hydraulikzylinder eines Kabinenhubgestells gerichtet, wobei die Dämpfungsbuchse eine Gummi-Metall-Buchse ist. Die Dämpfungsbuchse kann ferner alle oder einen Teil der Merkmale umfassen, welche in der Beschreibung in Bezug auf die Dämpfungsbuchse des Kabinengestells genannt sind. Auf eine explizite Wiederholung der Merkmale wird deshalb verzichtet.

Die Erfindung ist ferner auf ein Materialumschlaggerät mit einem Kabinenhubgestell nach einem der Ansprüche 1-8 gerichtet. Das Gestell ist dabei wenigstens teilweise über eine Dämpfungsbuchse mit dem restlichen Gefüge des Materialumschlaggeräts verbunden.

Weitere Einzelheiten und Vorteile der Erfindung sind anhand der in den Figuren beispielhaft gezeigten Ausführung erläutert. Dabei zeigen:
- Figur 1:: einen Teil eines erfindungsgemäßen Kabinenhubgestells mit einem Hydraulikzylinder;
- Figuren 2 und 3:: ein erfindungsgemäßes Kabinenhubgestell in Seitenansicht und unterschiedlichen Schwenkzuständen; und
- Figur 4:: eine erfindungsgemäße Dämpfungsbuchse.

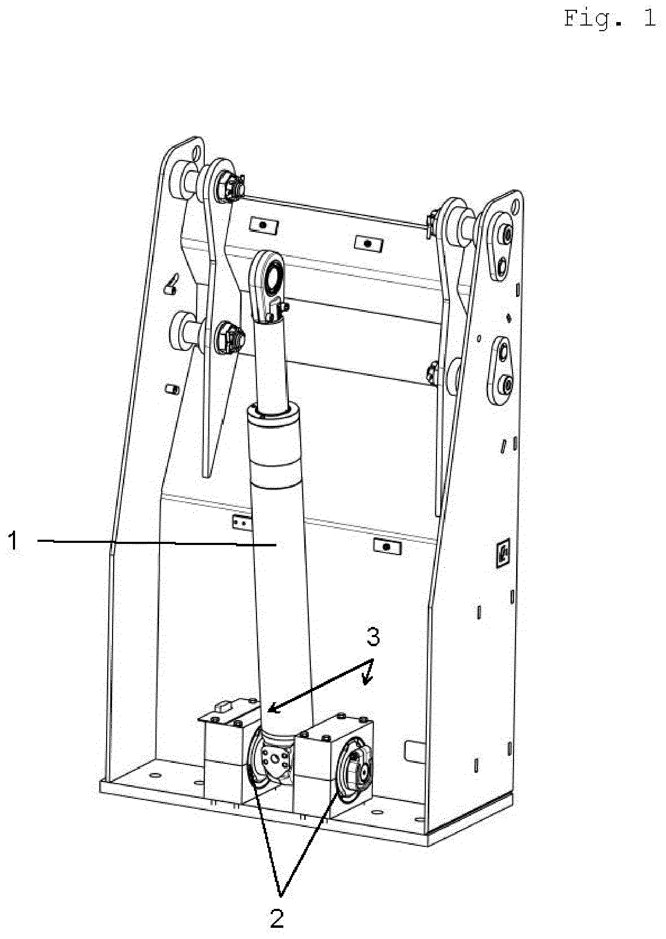

Figur 1 zeigt ein erfindungsgemäßes Kabinenhubgestell für ein Materialumschlaggerät, mit einem Hydraulikzylinder 1, der im Ausführungsbeispiel der Figur 1 über zwei Dämpfungsbuchsen 2 mit einem unteren Abschnitt des Kabinenhubgestells gekoppelt ist. Bei dem genannten unteren Abschnitt des Kabinenhubgestells kann es sich um einen Anschluss bzw. einen Anschlussabschnitt handeln, der zum Koppeln des Kabinenhubgestells mit dem restlichen Gefüge eines nicht näher gezeigten Materialumschlaggeräts ausgebildet ist und insbesondere Durchführungen für die genannte Kopplung umfassen kann.

Die Dämpfungsbuchse 2 bzw. die Dämpfungsbuchsen 2 sind im Ausführungsbeispiel der Figur bodenseitig am Hydraulikzylinder 1 vorgesehen.

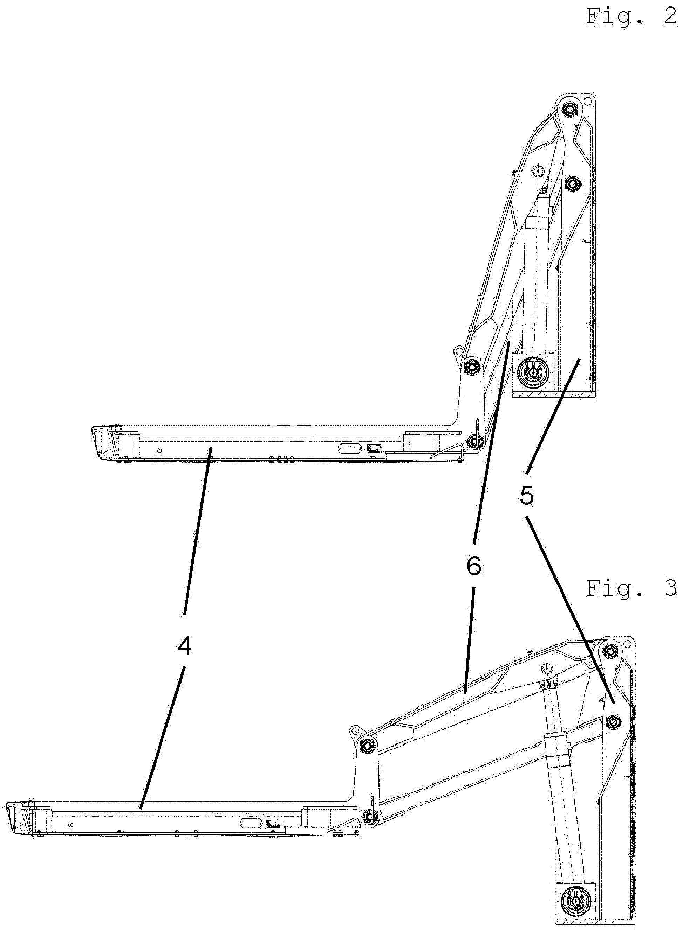

Alternativ oder zusätzlich kann es vorgesehen sein, dass eine oder mehrere Dämpfungsbuchsen 2 an einer stangenseitigen Kopplungsseite des Hydraulikzylinders 1 vorgesehen sind. Diese stangenseitige Kopplungsstelle kann beispielsweise mit den in Figuren 2 und 3 gezeigten Abschnitten des Kabinenhubgestells gekoppelt sein.

Denkbar ist somit auch eine Ausführung des Kabinenhubgestells, bei der beispielsweise vier Dämpfungsbuchsen 2 zum Koppeln des Hydraulikzylinders 1 mit dem Kabinenhubgestell und/oder mit sonstigen Strukturen des Materialumschlaggeräts vorgesehen sind. Die Dämpfungsbuchse 2 kann demnach bodenseitig und/oder stangenseitig am Hydraulikzylinder 1 vorgesehen sein.

Wie Figur 1 zu entnehmen ist, kann eine Lagerschale 3 oder eine Mehrzahl von Lagerschalen 3 zum Koppeln der Dämpfungsbuchse 2 oder der Dämpfungsbuchsen 2 an Strukturen des Kabinenhubgestells oder an sonstigen Abschnitten des Materialumschlaggeräts vorgesehen sein.

Die Lagerschalen 3 können dabei eine Tiefe aufweisen, die nicht größer ist als die Tiefe des Anschlussabschnitts, an dem die Lagerschalen 3 vorgesehen sind.

Die Lagerschale 3 oder die Lagerschalen 3 können insbesondere zylinderförmigen Ausnehmungen oder wenigstens teilweise zylinderförmige Ausnehmungen zur Aufnahme der Dämpfungsbuchse 2 umfassen. Mittels der Lagerschale 3 ist es möglich, eine Dämpfungsbuchse 2 mit dem weiteren Gefüge des Kabinenhubgestells und/oder das Materialumschlaggeräts beispielsweise zu verschrauben.

Wie Figur 1 weiter zu entnehmen ist, kann die Lagerschale 3 Durchführungen für Feststellmittel wie beispielsweise Schrauben umfassen. Im Ausführungsbeispiel der Figur 1 umfasst jede Lagerschale 3 bzw. jede Komponente der Lagerschalen 3 genau vier Durchführungen für entsprechende Feststellmittel. Denkbar sind aber auch Ausführungen der Lagerschale 3 mit einer davon abweichenden Anzahl an Durchführungen.

Die Lagerschale 3 bzw. die Lagerschalen 3 können beidseitig an dem Hydraulikzylinder 1 vorgesehen sein und insbesondere symmetrisch zueinander angeordnet sein. Die Lagerschalen 3 können ferner an bestehenden Materialumschlaggeräten nachgerüstet werden und so erfindungsgemäße Kabinenhubgestelle nach Bedarf einfach nachgerüstet werden.

Es ist auch denkbar, dass die Lagerschalen 3 oder Teile der Lagerschalen 3 einstückig mit Komponenten des Kabinenhubgestells ausgebildet sind. Insbesondere kann wenigstens ein unterer Teil einer Lagerschale 3 einstückig mit einem unteren Abschnitt des Kabinenhubgestells gefertigt oder mit einem unteren Abschnitt des Kabinenhubgestells verschweißt sein.

Figuren 2 und 3 zeigen das Kabinenhubgestell in einer nach unten (Figur 2) und einer im Wesentlichen horizontal (Figur 3) verschwenkten Position. Das Kabinenhubgestell kann einen Podestabschnitt 4 umfassen, welcher mit einem Geräteabschnitt 5 über beispielsweise ein Viergelenk 6 so verbunden ist, dass der Podestabschnitt 4 in allen Schwenkstellungen horizontal ausgerichtet ist.

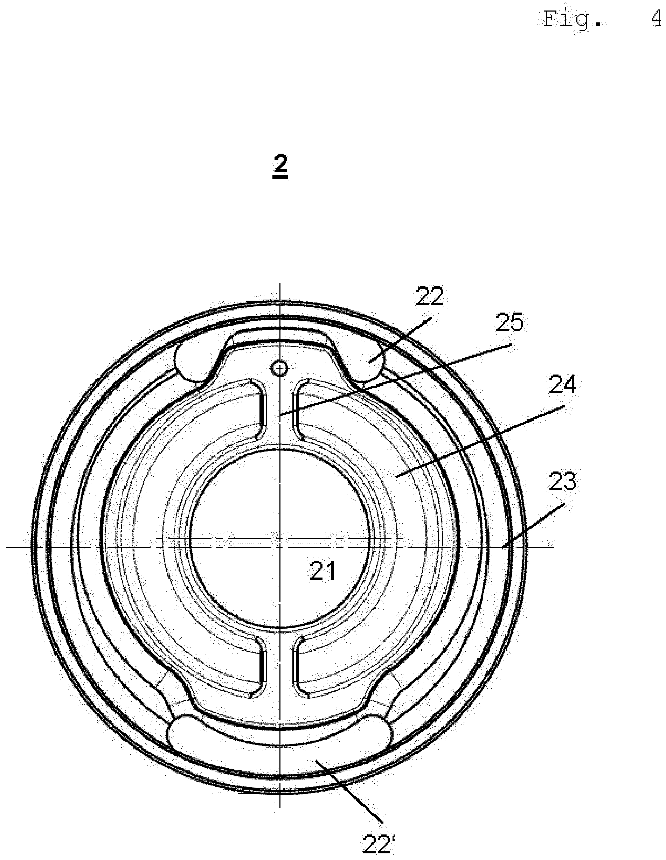

Figur 4 zeigt eine vergrößerte Draufsicht einer Dämpfungsbuchse 2, die insbesondere als Gummi-Metall-Buchse mit wenigstens zwei unterschiedlichen Unterabschnitten ausgebildet sein kann. Ein Unterabschnitt der Dämpfungsbuchse 2 kann dabei ein aus Gummi bestehender Gummiabschnitt sein und ein anderer Abschnitt kann ein aus Metall gefertigter Metallabschnitt sein.

Insbesondere ist es denkbar, dass der Gummiabschnitt der Dämpfungsbuchse 2 innerhalb des Metallabschnitts gelagert ist. Die Dämpfungsbuchse 2 kann ferner eine insbesondere radial mittig oder auch asymmetrisch angeordnete und wenigstens teilweise zylindrisch ausgebildete Durchführung 21 umfassen, durch die eine Kopplungseinrichtung zum Koppeln der Dämpfungsbuchse 2 mit dem Hydraulikzylinder 1 geführt sein kann. Radial davon nach außen beabstandet kann wenigstens eine radiale Durchführung 22, 22' vorgesehen sein, die je nach gewünschten Dämpfungseigenschaften der Dämpfungsbuchse dimensioniert sein kann.

Die im Ausführungsbeispiel der Figur 4 gezeigte obere zweite Durchführung 22 kann Bereiche mit unterschiedlich großen radialen Erstreckungen aufweisen. Insbesondere kann in einem in Umfangsrichtung der Durchführung 22 mittleren Bereich eine besonders geringe radiale Erstreckung der Durchführung 22 vorgesehen sein. Die in Umfangsrichtung gesehen äußeren Bereiche der Durchführung 22 können dagegen größere radiale Erstreckungen aufweisen oder umgekehrt.

Wie am Beispiel der unteren zweiten Durchführung 22' erkennbar ist, kann die zweite Durchführung 22' in Umfangsrichtung gesehen auch eine konstante radiale Erstreckung aufweisen. Ferner ist es denkbar, unterschiedlich dimensionierte zweite Durchführungen 22, 22' und auch unterschiedliche Anzahlen der genannten zweiten Durchführungen 22, 22' an einer Dämpfungsbuchse 2, insbesondere in Abhängigkeit vom gewünschten elastischen Verhalten der Dämpfungsbuchse 2, vorzusehen.

In einem radial äußeren Bereich, insbesondere des Gummiabschnitts der Dämpfungsbuchse 2 kann wenigstens eine im Wesentlichen in Umfangsrichtung verlaufende erste Ausnehmung 23 vorgesehen sein, die beispielsweise in gleichem radialen Abstand von der Mittelachse der Dämpfungsbuchse 2 vorgesehen sein kann wie die zweiten Durchführungen 22, 22'. Die Tiefe der ersten Ausnehmung 23 kann zur Beeinflussung des elastischen Verhaltens der Dämpfungsbuchse 2 ausgewählt werden.

Es kann ferner eine zweite, wenigstens teilweise in Umfangsrichtung verlaufende Ausnehmung 24 vorgesehen sein, die radial weiter innen angeordnet sein kann, als die erste Ausnehmung 23. Es können ferner zwei oder mehr zweite Ausnehmungen 24 vorgesehen sein, die mittels Stegen 25 voneinander getrennt sein können. Die Stege 25 und die zweiten Ausnehmungen 23 können je nach gewünschten Dämpfungsverhalten unterschiedlich dimensioniert und beispielsweise unterschiedliche Tiefen oder Breiten aufweisen.

Die Dämpfungsbuchse 2 kann ohne zueinander bewegliche Teile bzw. mit lediglich elastisch zueinander beweglichen Teilen gefertigt sein. Es ist ferner denkbar, dass die Dämpfungsbuchse 2 zwei Metallabschnitte umfasst, von denen einer radial außen und einer radial innen, im Bereich der ersten Durchführung 21 vorgesehen ist. Insbesondere ist denkbar, dass ein Metallabschnitt die erste Durchführung begrenzt 21 und/oder hohlzylinderförmig ausgebildet ist.

Der Durchmesser der ersten Durchführung 21 der Dämpfungsbuchse 2 kann in etwas der axialen Erstreckung der insbesondere wenigstens teilweise hohlzylinderförmig ausgebildeten Dämpfungsbuchse 2 entsprechen. Der Unterschied zwischen dem Durchmesser der ersten Durchführung 21 und der axialen Erstreckung der Dämpfungsbuchse 2 kann insbesondere weniger als 50% der jeweils längeren Abmessung betragen.

## Patentansprüche

1. Kabinenhubgestell für ein Materialumschlaggerät, mit wenigstens einem gedämpft gelagerten Hydraulikzylinder (1) zum Verstellen des Kabinenhubgestells, **dadurch gekennzeichnet, dass** der Hydraulikzylinder (1) über wenigstens eine Dämpfungsbuche (2) am Kabinenhubgestell und/oder an einem sonstigen Abschnitt des Materialumschlaggeräts gelagert ist.

2. Kabinenhubgestell nach Anspruch 1, **dadurch gekennzeichnet, dass** die Dämpfungsbuchse (2) eine Gummi-Metall-Buchse ist.

3. Kabinenhubgestell nach Anspruch 1 oder 2, **dadurch gekennzeichnet, dass** wenigstens eine Dämpfungsbuchse (2) bodenseitig und/oder stangenseitig an dem Hydraulikzylinder (1) gelagert ist.

4. Kabinenhubgestell nach Anspruch 1, 2 oder 3, **dadurch gekennzeichnet, dass** die Dämpfungsbuchse (2) mittels wenigstens einer Lagerschale (3) am Kabinenhubgestell und/oder an einem sonstigen Abschnitt des Materialumschlaggeräts gekoppelt ist.

5. Kabinenhubgestell nach einem der vorhergehenden Ansprüche, **dadurch gekennzeichnet, dass** die Dämpfungsbuchse (2) wenigstens eine insbesondere radial mittig angeordnete und weiter insbesondere wenigstens teilweise zylinderförmige Durchführung (21) umfasst.

6. Kabinenhubgestell nach Anspruch 5, **dadurch gekennzeichnet, dass** die Dämpfungsbuchse (2) wenigstens eine radial weiter außen als die erste Durchführung (21) gelegene zweite Durchführung (22, 22') umfasst.

7. Kabinenhubgestell nach einem der vorhergehenden Ansprüche, **dadurch gekennzeichnet, dass** die Dämpfungsbuchse (2) wenigstens eine in Umfangsrichtung der Dämpfungsbuche (2) verlaufende Ausnehmung (23) umfasst.

8. Kabinenhubgestell wenigstens nach Anspruch 6, **dadurch gekennzeichnet, dass** die wenigstens eine zweite Durchführung (22, 22') in Richtung des Hydraulikzylinders (1) ausgerichtet ist.

9. Dämpfungsbuchse für einen Hydraulikzylinder eines Kabinenhubgestells, wobei die Dämpfungsbuchse (2) eine Gummi-Metall-Buchse ist.

10. Materialumschlaggerät mit einem Kabinenhubgestell nach einem der Ansprüche 1-8.
